(19) **Europäisches Patentamt / European Patent Office / Office européen des brevets**

(11) **EP 2 692 920 A2**

(12) **EUROPEAN PATENT APPLICATION**
published in accordance with Art. 153(4) EPC

(43) Date of publication:
**05.02.2014 Bulletin 2014/06**

(51) Int Cl.:
**D03D 1/02** (2006.01)     **D03D 11/00** (2006.01)
**B60R 21/16** (2006.01)

(21) Application number: **12765287.3**

(22) Date of filing: **30.03.2012**

(86) International application number:
**PCT/KR2012/002398**

(87) International publication number:
**WO 2012/134228 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011   KR 20110029865**
**30.03.2012   KR 20120033106**

(71) Applicant: **Kolon Industries, Inc.**
**Gwacheon-si, Gyeonggi-do 427-709 (KR)**

(72) Inventors:
- **YOUN, Jung-Hoon**
**Gumi-si**
**Gyeongbuk 730-140 (KR)**
- **KWAK, Dong-Jin**
**Gumi-si**
**Gyeongbuk 730-819 (KR)**

- **KIM, Jae-Hyung**
**Gumi-si**
**Gyeongbuk 730-796 (KR)**
- **KIM, Hee-Jun**
**Daegu 701-764 (KR)**
- **KIM, Ki-Jeong**
**Daegu 702-724 (KR)**
- **LEE, Sang-Mok**
**Gumi-si**
**Gyeongbuk 730-020 (KR)**

(74) Representative: **Ter Meer Steinmeister & Partner**
**Patentanwälte**
**Mauerkircherstrasse 45**
**81679 München (DE)**

(54) **TWO-LAYER FABRIC WHICH CAN BE INFLATED WITH AIR, AND METHOD FOR PRODUCING SAME**

(57)     The present invention relates to a double-layered fabric including separated two fabric layers which are simultaneously woven by an OPW (one piece woven) method. Specifically, the present invention relates to a gas-inflatable double-layered fabric including a double patterned weave comprised of separated top and bottom fabric layers which are simultaneously woven and have different patterns each other, a preparation method thereof, and an airbag including the same.

Fig. 13

EP 2 692 920 A2

**Description**

**BACKGROUND OF THE INVENTION**

**(a) Field of the Invention**

The present invention relates to a gas-inflatable double-layered fabric including separated two fabric layers which are simultaneously woven by an OPW (one piece woven) method. More particularly, the present invention relates to a gas-inflatable fabric which is very useful for a car airbag or a life jacket.

**(b) Description of the Related Art**

An inflatable fabric is useful for a car airbag, a life jacket, and the like. Particularly, the inflatable fabric is used to a side curtain airbag that is unfolded on the side window of a vehicle during an accident, in order to protect a driver's or a passenger's head from being injured by the window or side frame of the vehicle when the vehicle overturns and rolls over. The side curtain airbag should maintain the inflated state for at least 5 seconds when the vehicle rolls over, in order to protect a passenger safely during the accident, and the inflatable fabric is useful in this case.

The method of preparing the product having gas-inflatability such as airbag for a vehicle is mainly classified into a method of sewing, fusing, or adhering two fabrics and a method of using a double-layered fabric of which separated two fabric layers are simultaneously woven by an OPW (one piece woven) method and partially combined with co-woven parts.

However, the method of sewing two fabrics, fusing by heat or supersonic treating, or adhering with an adhesive, i.e., the first method as described above, needs additional sewing, fusing, or adhering processes after preparing two fabric layers, and thus there are problems of that the process becomes complicated and the manufacturing cost increases also.

To resolve the problems, the method of preparing a gas-inflatable product such as airbag by using a gas-inflatable double-layered fabric, as the second method described above, has recently been attempted.

The double-layered fabric which is inflatable by gas such as air has two separated fabric layers and co-woven parts for combining the separated fabric layers. In the fabric having a system, i.e., an inflating part, closed by the co-woven parts, the co-woven parts take a role of firmly combining separated two fabric layers, when the fabric is rapidly inflated by gas such as air, so that the gas should not be leaked at the part of combining separated two fabric layers. Thus, a 3X3 basket weave or a 2X2 basket weave has mainly been used for the weave of the co-woven part in the double-layered fabric. Furthermore, the double-layered fabric has a non-inflated part fixed the boundaries by the co-woven part. The non-inflated part is for supporting the inflating part. For the non-inflated part, separated two fabric layers of the inflating part that is centered on the co-woven part are maintained or the plain weave and the like has generally been used.

However, when the double-layered fabric is prepared by co-weaving separated two fabric layers according to an OPW (one piece woven) method as the method disclosed above, the upper layer and the lower layer of the co-woven fabric cannot help having the same pattern weave always at the corresponding position even if various pattern weaves are applied thereto. When the same pattern is applied to the upper layer and the lower layer, it may be difficult to distinguish front and rear, left and right, or top and bottom with the naked eye. Especially, there is a problem that additional processes of checking each product one by one and marking the same separately are required for such distinguishment. Therefore, the research for improving the same is required.

**SUMMARY OF THE INVENTION**

It is an aspect of the present invention to provide a gas-inflatable double-layered fabric of which separated two fabric layers are woven by an OPW (one piece woven) method and have different patterns each other, having superior internal pressure maintaining property, durability, and stability.

It is another aspect of the present invention to provide a method of preparing the gas-inflatable double-layered fabric.

It is still another aspect of the present invention to provide a car airbag prepared by including the gas-inflatable double-layered fabric.

The present invention provides a gas-inflatable double-layered fabric, including a double patterned weave comprised of separated top and bottom fabric layers which are simultaneously woven and have different patterns each other.

The present invention also provide a method of preparing the gas-inflatable double-layered fabric, including the step of weaving a double patterned weave with an OPW (one piece woven) method so that separated top and bottom fabric layers are simultaneously woven and have different patterns each other.

The present invention also provides a car airbag prepared by including the gas-inflatable double-layered fabric.

## DETAILED DESCRIPTION OF THE EMBODIMENTS

Hereinafter, the gas-inflatable double-layered fabric according to detailed embodiments of the present invention and the airbag including the same are explained in more detail. However, they are merely presented as an example of the present invention, and thus it is clearly understood to a person skilled in the art that the scope of the present invention is not limited to the detailed embodiments and various modifications and executions are possible according to the embodiments within the scope of the present invention.

In addition, "include" or "comprise" means to include any components (or ingredients) without particular limitation unless there is no particular mention about them in this description, and it cannot be interpreted as a meaning of excluding an addition of other components (or ingredients).

The present inventors found that if a gas-inflatable double-layered fabric includes a double patterned weave composed of separated top and bottom fabric layers which are simultaneously woven by an OPW method and have different patterns each other, it is possible to provide an airbag cushion of which the front and rear and the top and bottom are easily distinguished without additional processes by the OPW method while maintaining excellent mechanical properties and internal pressure maintaining property, and completed the present invention. Such gas-inflatable double-layered fabric can be effectively applied to a car airbag or a life jacket.

Particularly, former airbags could be equipped by a simple method but recently airbags become more complicated and subdivided in order to satisfy more consolidated safety laws. Namely, there was no need to distinguish the front and rear or the top and bottom of airbags in the past, but recently the need for preparing and equipping airbags distinguishing the front and rear or the top and bottom is increased. The gas-inflatable double-layered fabric of the present invention is prepared by the OPW method and can provide complicated and subdivided airbag cushion products effectively without the additional process of marking a sign on each product.

According to one embodiment of the present invention, a gas-inflatable double-layered fabric including a double patterned weave composed of separated top and bottom fabric layers woven simultaneously and having different weave patterns each other may be provided.

The gas-inflatable double-layered fabric of the present invention is comprised of top and bottom fabric layers which are simultaneously woven with different weave patterns each other, and thus the front and rear or the top and bottom of the product can be easily distinguished with the naked eye without additional processes. Therefore, it can make the preparation process of the shock-absorbing articles such as airbags efficient, and can prevent a worker making the mistake of miss checking the left and right, or the top and bottom of the products remarkably.

Particularly, the present invention can provide a gas-inflatable double-layered fabric including an inflating part having gas-inflatability, a non-inflating part supporting the inflating part, and a co-woven part constituting a boundary between the inflating part and the non-inflating part, wherein the inflating part is composed of a double patterned weave including separated top and bottom fabric layers which are simultaneously woven and have different patterns each other.

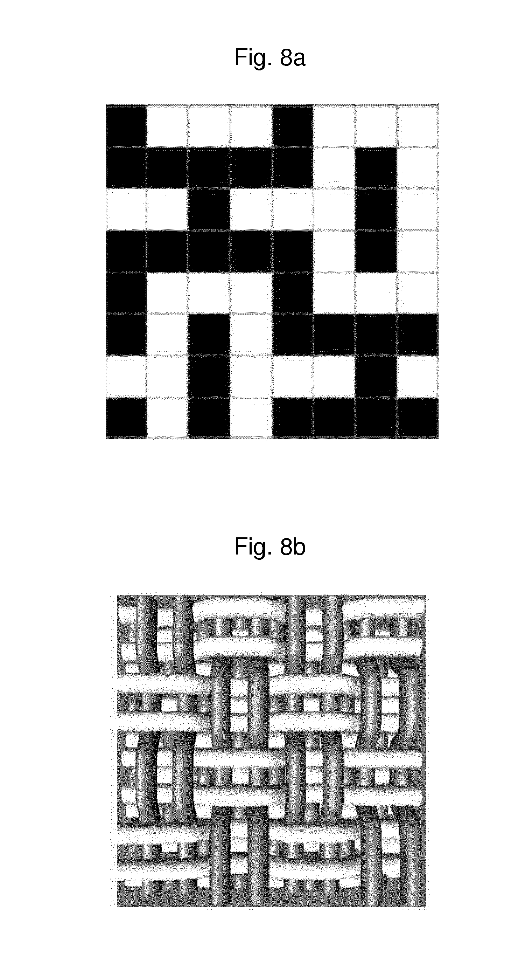

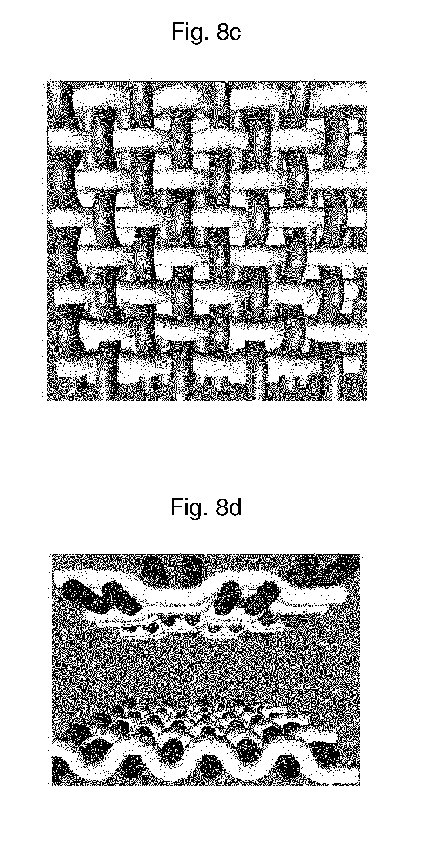

In the gas-inflatable double-layered fabric, 'double patterned weave' means a fabric weave pattern including separated top and bottom fabric layers which are simultaneously woven and have not same weave pattern but different weave patterns each other at the corresponding position, as illustrated in Figs. 8 to 10. At this time, the top and bottom fabric layers of the double patterned weave may totally or partially differ at the corresponding position of the fabrics.

In the gas-inflatable double-layered fabric, the weaves of the top and bottom fabric layers may include a 1X1 weave, a 2X2 weave, a 3X3 weave, a stain weave, a warp rib weave, a weft rib weave, or a mixed weave thereof, respectively.

In the present invention, the double patterned weave may be applied as various weave patterns as long as the top fabric layer and the bottom fabric layer have different weave patterns each other at the corresponding position. Specifically, in the double patterned weave, the weave of the top fabric layer may be a 1X1 weave and the weave of the bottom fabric layer may be a 2X2 weave, a 3X3 weave, a stain weave, a warp rib weave, a weft rib weave, or a mixed weave thereof; the weave of the top fabric layer may be a 2X2 weave and the weave of the bottom fabric layer may be a 1X1 weave, a 3X3 weave, a stain weave, a warp rib weave, a weft rib weave, or a mixed weave thereof; the weave of the top fabric layer may be a 3X3 weave and the weave of the bottom fabric layer may be a 1X1 weave, a 2X2 weave, a stain weave, a warp rib weave, a weft rib weave, or a mixed weave thereof; the weave of the top fabric layer may be a stain weave and the weave of the bottom fabric layer may be a 1X1 weave, a 2X2 weave, a 3X3 weave, a warp rib weave, a weft rib weave, or a mixed weave thereof; the weave of the top fabric layer may be a warp rib weave and the weave of the bottom fabric layer may be a 1X1 weave, a 2X2 weave, a 3X3 weave, a stain weave, a weft rib weave, or a mixed weave thereof; or the weave of the top fabric layer may be a weft rib weave and the weave of the bottom fabric layer may be a 1X1 weave, a 2X2 weave, a 3X3 weave, a stain weave, a warp rib weave, or a mixed weave thereof. At this time, it is also possible to change the top layer and the bottom layer of the double patterned weave so as to be a different weave. However, in the aspect of securing effective internal pressure maintaining property and excellent mechanical properties such as tearing strength in the airbag preparation, one of the top and bottom fabrics may be a 1X1 weave, and the other fabric may be a 2X2 weave or a 3X3 weave.

In the gas-inflatable double-layered fabric of the present invention, the area of the double patterned weave may be 0.01% to 60%, preferably 0.05% to 50%, more preferably 0.1% to 40%, and still more preferably 0.3% to 35%, to the total area of the separated top and bottom fabric layers. The area of the double patterned weave may be 0.01 % or more to the total area of the separated top and bottom fabric layers in the aspect of easily distinguishing the front and rear, the left and right, or the top and bottom of the final product including the double-layered fabric with the naked eye, and it may be 60% or less in the aspect of securing the optimized tension maintenance and weaving efficiency in the weaving process.

Hereinafter, the double-layered fabric according to one embodiment of the present invention and the airbag including the same are explained in more detail as disclosed below by referring the annexed Figs.

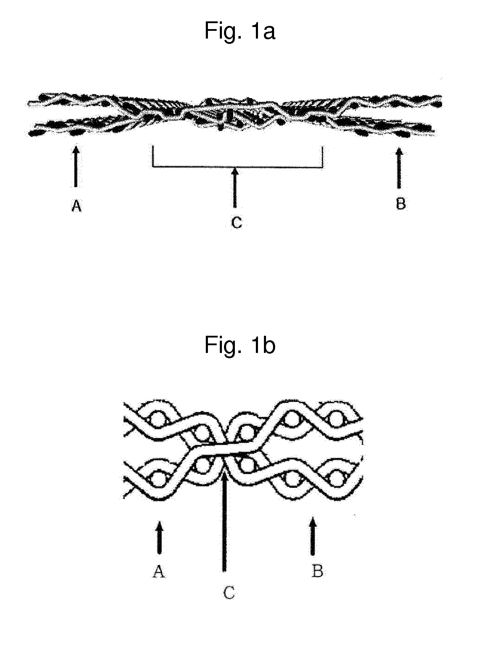

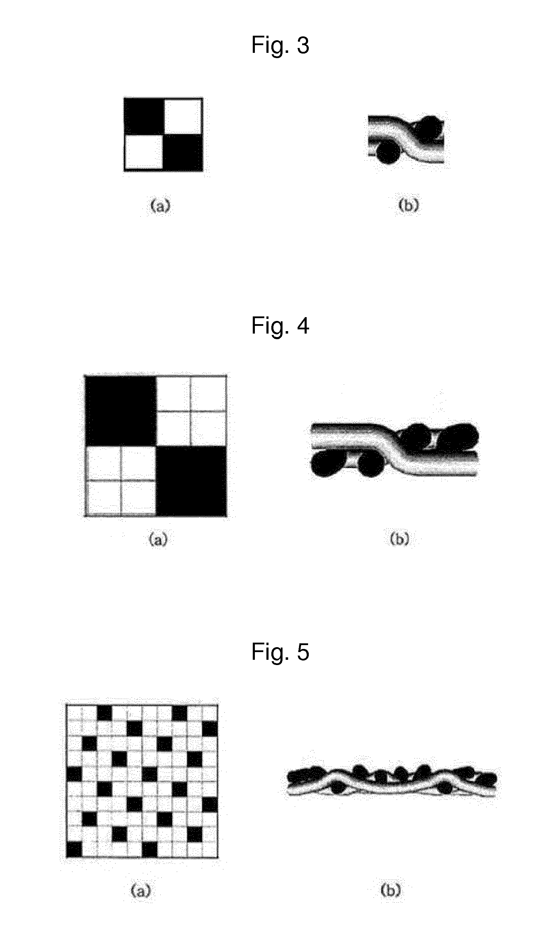

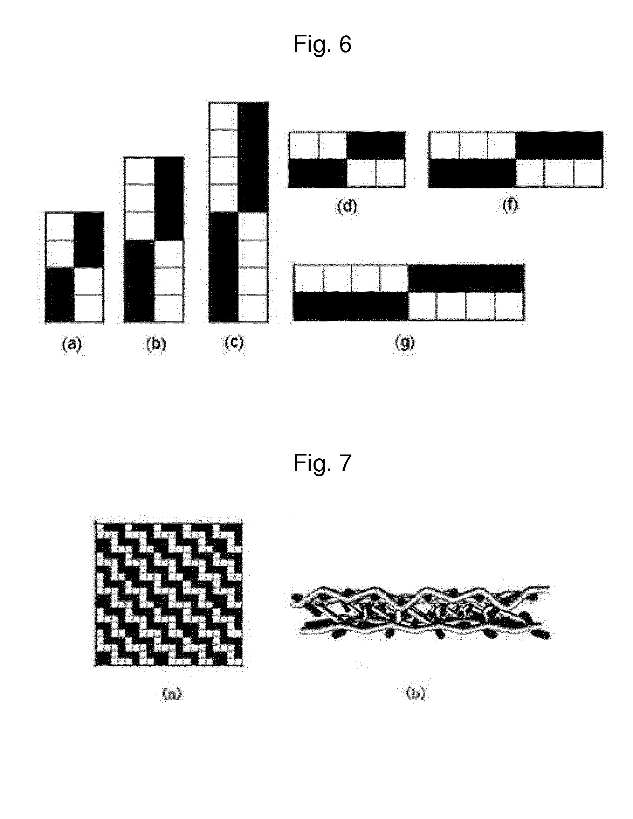

Figs. 1a and 1b are cross sections of a weave organizing the double-layered fabric of the present invention. As shown in Figs. 1a and 1b, the double-layered fabric of the present invention is composed of the parts of separated layers A, B those are separated two fabric layers, and a co-woven part C that is co-woven between separated two fabric layers. In the gas-inflatable double-layered fabric of the present invention, separated two fabric layers having plain weave (A and B in Figs. 1a to 2b) are simultaneously woven and the co-woven part (C in Figs. 1a to 2b) is woven by using a jacquard loom. At this time, the top and bottom fabric layers simultaneously woven have different weave patterns each other, for example, they may be woven so as to include a 1X1 plain weave (Fig. 3), a 2X2 basket weave (Fig. 4), a 3X3 basket weave, a stain weave (Fig. 5), a warp rib weave and a weft rib weave (Fig. 6), a partially co-woven weave of a plain double-layered weave (Fig. 7), or a mixed weave of at least one thereof, respectively.

The main purpose of the fabric of the present invention is the inflatability by gas, particularly the co-woven part prevents the inflating gas from leaking through separated two fabrics and endures the inflating pressure of the gas.

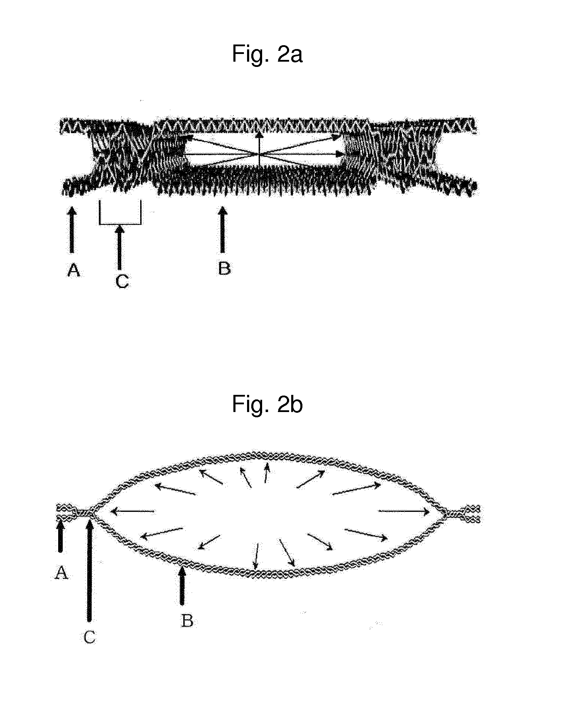

As disclosed above, the fabric including the weaves separated into a upper layer and a lower layer and the weave combining the layers can be divided into the weaves of the separated layers (A and B in Figs. 1a to 2b) and the co-woven weave (C in Figs. 1a to 2b). Also, the fabric may include a trisecting structure. The structure consists of an area closed by the separated layers (B in Figs. 2a and 2b), i.e., an inflatable area, a co-woven area (C in Figs. 1a to 2b), and an area that is unrelated to the inflatability (A in Figs. 2a and 2b) such as an external area of the closed area with the co-woven area, according to arrangements of the patterns.

The weave of the left separated layer part A on the left of the co-woven point and the weave of the right separated layer part B on the right of the co-woven point in Figs. 1a and 1b are illustrated in Figs. 8 to 10. Furthermore, the left and right parts are divided by the weave of the co-woven part C.

The gas-inflatable inflating part of the present invention includes separated two fabric layers which are woven by the OPW method, and it may be woven into a double-layered fabric as illustrated as B in Figs. 1a and 1b. Especially, the separated two fabric layers which are simultaneously woven in the gas-inflatable inflating part may be a double-layered fabric composed of different weave patterns each other to which the weave patterns illustrated in Figs. 8 to 10 are applied.

Furthermore, the separated two fabric layers of the inflating part having gas inflatability are combined together by and at the co-woven part. That is, the co-woven part forms a boundary between the inflating part and the non-inflating part, as illustrated as C in Figs. 1a and 1b. It is preferable that the circumference of separated two fabric layers is partially co-woven into a single fabric so that the co-woven part seals hermetically the inflating part having gas inflatability.

In the present invention, the co-woven part C means a woven point, a woven line, or a woven face where the separated two fabric layers of the separated layer parts A, B join together and form one layer. The co-woven part, i.e., the woven point, the woven line, or the woven face of separated two fabric layers may be formed by combining the warp of the upper layer with the weft of the lower layer, the weft of the upper layer with the warp of the lower layer, the warp of the lower layer with the weft of the upper layer, or the weft of the lower layer with the warp of the upper layer. The weave organizing the co-woven part is called a co-woven weave, and it is called a co-woven point when the co-woven weave is represented as a point, it is called a co-woven line when the co-woven weave is represented as a line, and it is called a co-woven face when the co-woven weave is represented as a face. The co-woven point, the co-woven line, and the co-woven face are called the co-woven part altogether. Furthermore, the woven point means a part constituting the fabric where the warp and the weft are crossed up and down each other.

Particularly, the weave patterns as illustrated in Figs. 8 to 10 may be applied to the gas-inflatable double-layered fabric according to one embodiment of the present invention so that the top fabric layer and the bottom fabric layer of the inflating part can be woven simultaneously with different weave pattern.

Furthermore, the weave pattern of the top fabric layer and the bottom fabric layer of the inflating part may be a 1X1 weave (Fig. 3), a 2X2 weave (Fig. 4), a 3X3 weave, a stain weave (Fig. 5), a warp rib weave (Figs. 6a to 6c) and a weft rib weave (Figs. 6d to 6f), or a mixed weave thereof.

Here, the warp rib weave and the weft rib weave may have a width of 4 or more yarns to the warp or weft direction. A 2X2 weave, a 3X3 weave, or a 4X4 weave as illustrated in Figs. 6a to 6c may be used as the warp rib weave, and a 2X2 weave, a 3X3 weave, or a 4X4 weave as illustrated in Figs. 6d to 6f may be used as the weft rib weave.

Meanwhile, the present invention can make the manufacturing process effective when preparing a final product for absorbing shock like an airbag, and can inhibit the gas leakage maximally when the part of separated layers is inflated by gas, because the combining force of the co-woven part and the non-inflating part is firm.

Here, the co-woven part prevents the inflating gas from leaking between separated two fabric layers, and takes a role of standing against the pressure of the inflating gas. The co-woven part combines the inflating part having gas-inflatability that is composed of the double-layered weave, and forms a boundary between the inflating part and the non-inflating part. Occasionally, the circumference of separated two fabric layers may be partially co-woven into a single fabric so that the co-woven part seals hermetically the inflating part having gas inflatability.

The weave pattern of the co-woven part may be composed of a 2X2 basket weave (Fig. 4), a 3X3 basket weave, a stain weave (Fig. 5), a warp rib weave (Figs. 6a to 6c), a weft rib weave (Figs. 6d to 6f), a partially co-woven weave of a double-layered weave (Fig. 7), or a mixed weave of at least one thereof.

Particularly, it is preferable that the co-woven part is composed of at least 13 or more, or 18 or more yarns so that the co-woven part is firmly maintained, the leakage of the gas is effectively inhibited, and the gas sneaking away from the bag can be blocked during gas inflating, during the gas inflation.

Meanwhile, in the gas-inflatable double-layered fabric according to another embodiment of the present invention, the non-inflating part supporting the inflating part may include a double-layered fabric part and a partially co-woven part dividing the same. Particularly, the gas leaking phenomenon at the co-woven part can maximally be prevented because the gas can get out stepwise even at the non-inflating part when the double-layered fabric is inflated by gas, and the properties such as the internal pressure maintaining property and the like can be improved, by including a partially co-woven part which is co-woven stepwise and alternately in the weave of the non-inflatable part of the double-layered fabric.

The non-inflating part may include a partially co-woven part which is formed by co-weaving the double-layered fabric including separated two fabric layers and the weave selected from the group consisting of a 1X1 weave (Fig. 3), a 2X2 weave (Fig. 4), a 3X3 weave, a stain weave (Fig. 5), a warp rib weave (Figs. 6a to 6c), a weft rib weave (Figs. 6d to 6f), and a mixed weave of at least one thereof stepwise and alternately.

In the present invention, the materials of the yarns used in the plain weave, the double-layered weave, the single layered weave, the partially co-woven weave, and so on for preparing the double-layered fabric are not limited particularly, however, any one selected from the group consisting of nylon 66, polyethyleneterephthalate (PET), polypropylene, and a polyester is preferable.

Furthermore, the gas inflatable double-layered fabric may include a resin layer coated on the face of the same in order to reduce the gas leakage. The resin used for the coated layer may be a conventional resin used for a fiber coating, and a resin including a silicone resin, a urethane resin, or a mixture thereof is preferable, and the silicone resin coating is more preferable to maintain the airtightness and the strength during inflating.

The resin coating is for filling up the gap of the double-layered fabric effectively, and it can be applied to one face or two faces of the fabric. A conventional coating method, like a knife coating method, a doctor blade method, a spray coating method, and the like, can be used as the coating method, and the knife coating method is used preferably. Furthermore, a multi-step coating where the coating is carried out many times can be used to the coating method. When a under coating and a top coating are used together as the multi-step coating, not only the airtightness is increased but also the flexibility can effectively be improved because it reduces the thickness of the fabric compared with the coated amount. Particularly, it is preferable to coat the under coating and the top coating covering 2 times on the same face of the fabric.

At this time, the amount of the resin coated is preferably 30 g/m$^2$ to 150 g/m$^2$. When the coated amount is less than 30 g/m$^2$, there is much gas leakage of the airbag and it is impossible to maintain the inflated state for 5 seconds or more with a certain pressure after inflating. Furthermore, when the coated amount is more than 150 g/m$^2$, the airbag cannot show its ability because not only the airbag gets thick and the storage property gets worse but also the airbag contacts to the frame when it is inflated.

As disclosed above, the method of organizing the weave of the dividing point of the two layers or the starting point of the co-woven part disclosed above is the most important factor for designing the gas-inflatable fabric, because it is very important for the airtightness of the double-layered fabric that the elongation against the tension by high-pressure gas is kept to be a minimum.

Particularly, the double-layered fabric of the present invention resolved the problems by using a plain weave that has high elongation resistance against an external tension as the fabric layer and applying different weave patterns to the top and bottom fabric layers which are simultaneously woven. Preferably, the airtightness of the airbag can be increased by weaving the same with high density so that the cover factor of the top and bottom fabric layers which are simultaneously woven in the inflating part is 1,900 or more, according to the following Calculation Formula 1. When the cover factor is less than 1,900, there is a problem of that the gas leaks out easily during the gas inflating:

[Calculation Formula 1]

$$\text{Cover Factor (CF)} = \text{warp density (yarns/inch)} \times \sqrt{\text{(warp denier)}} + \text{weft density}$$

$$\text{(yarns/inch)} \times \sqrt{\text{(weft denier)}} .$$

Particularly, the warp density and the weft density of the top and bottom fabric layers may be 80 yarns/inch or less or 40 to 80 yarns/inch, preferably 75 yarns/inch or less or 45 to 75 yarns/inch, and more preferably 72 yarns/inch or less or 49 to 72 yarns/inch. The weaving density of fabric layer, namely the warp density and the weft density, of the inflating part may be 80 yarns/inch or less in the aspect of the weaving production efficiency.

Furthermore, the fineness of the yarns of the top and bottom fabric layers of the inflating part may be 150 to 900 denier, preferably 170 to 870 denier, and more preferably 210 to 840 denier. Here, the fineness may be 150 denier or more in the aspect of the strength of the fabric, and it may be 900 denier or less in the aspect of the weaving production efficiency.

It is preferable that the average thickness of one fabric layer constituting the gas-inflatable double-layered fabric of the present invention, that is measured by the ASTM D 1777 method, is 0.65 mm or less or 0.1 to 0.65 mm, preferably 0.60 mm or less or 0.15 to 0.60 mm, more preferably 0.55 mm or less or 0.15 to 0.55 mm, and still more preferably 0.5 mm or less or 0.2 to 0.5 mm. When the average thickness of the fabric layer excesses 0.65 mm, there may be a problem of that it is not easy to set up the airbag inside a vehicle.

And, the stiffness of the gas-inflatable double-layered fabric, that is measured by the ASTM D 4032 circular band method, may be 3.5 kgf or less or 0.1 to 3.5 kg, preferably 3.3 kgf or less or 0.15 to 3.3 kgf, more preferably 3.0 kgf or less or 0.15 to 3.0 kgf, and still more preferably 2.0 kgf or less or 0.2 to 2.0 kgf. If the stiffness value excesses 3.5 kgf, there may be a problem of that the airbag for vehicles may not inflate normally from the gas pressure.

The tensile strength of one fabric layer composing the inflating part in the gas-inflatable double-layered fabric, namely the top fabric layer and the bottom fabric layer, may be 1,000 N/5cm or more, preferably 1,300 N/5cm or more, and more preferably 1,500 N/5 cm or more. The tearing strength of the top and bottom fabric layers may be 50 N or more, preferably 60 N or more, and more preferably 70 N or more. The tensile strength and the tearing strength of the fabric layers may be 1,000 N/5cm or more and 50 N or more respectively so that the airbag made of the fabric does not burst and maintains the shape when the airbag is inflated.

The elongation at break of one fabric layer composing the inflating part, namely the top fabric layer and the bottom fabric layer, may be 15% to 60%, preferably 17% to 57%, and more preferably 20% to 55%. The elongation at break may be 15% or more so that the airbag made of the fabric and does not burst and maintains the shape by absorbing the inflating energy when the airbag is inflated, and it may be 60% or less in the aspect of securing excellent internal pressure maintaining property.

The seam strength of one fabric layer composing the inflating part, namely the top fabric layer and the bottom fabric layer, may be 500 N/5cm or more, preferably 600 N/5cm or more, and more preferably 700 N/5cm or more. The seam strength may be 500 N/5cm or more so that the airbag made of the fabric does not burst and maintains the shape when the airbag is inflated.

When measuring the internal pressure of the airbag after injecting gas with an instant pressure of 25 bar, the double-layered fabric of the present invention has the initial maximum pressure in the inflating part of 40 KPa or more, and the pressure after 6 seconds of 25 KPa or more for it to function as a side curtain airbag. The seam strength of the co-woven part (C in Fig. 1) measured by the ASTM D 5822 method should be at least 500 N/5cm in order to prevent tearing of the airbag when the side curtain airbag is inflated by high temperature and high pressure. And, the elongation at break that is measured by the ASTM D 5822 method should be 50% or less in order to minimize gas leakage at the co-woven part during inflation and prevent melting of the fabric by high temperature. Particularly, because a side curtain airbag requires a relatively higher coating amount than general airbags, it is very important to maintain its strength for a long time even after the fabric has been worn by vibration of the vehicle.

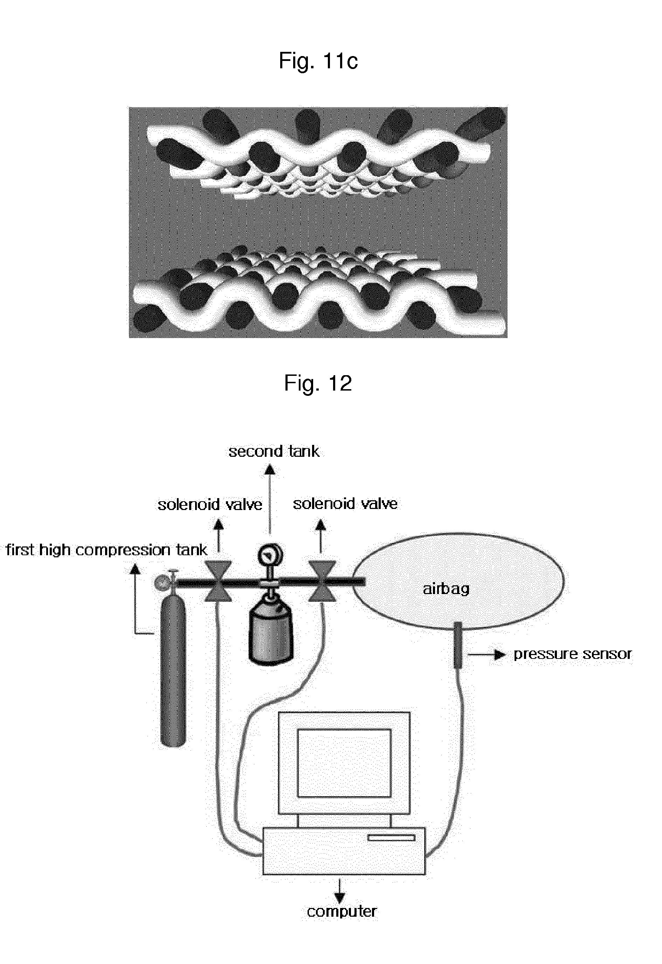

In a preferable example of the present invention, the internal pressure of the airbag can be measured by using a device as illustrated in Fig. 12. The measuring device is controlled to open the first solenoid valve by the computer so that nitrogen gas is filled in the second tank till 25 bar by opening solenoid valve, after filling nitrogen gas into the first high compression tank with high pressure. When the second tank has been filled, the compressed nitrogen gas filled in the second tank with the pressure of 25 bar is instantly injected into the airbag that is maintaining atmospheric pressure and inflates the airbag, by closing the first solenoid valve and opening the second solenoid valve by the computer. The initial maximum pressure in the airbag at this time is measured through a pressure sensor and the result is transferred to the computer, and the pressure after several seconds is measured again and recorded in the computer.

Therefore, the double-layered fabric of the present invention satisfies above conditions and the initial maximum pressure in the inflating part may be 40 KPa or more when the gas is injected therein with an instant pressure of 25 bar, the pressure after 6 seconds may be 25 KPa or more, the seam strength of the co-woven part may be 500 N or more, and the elongation at break may be 50% or less.

On the other hand, another embodiment of the present invention provides a method of preparing the gas-inflatable double-layered fabric with an OPW method.

The method of preparing a gas-inflatable double-layered fabric may include the step of weaving a double patterned weave with an OPW (one piece woven) method so that separated top and bottom fabric layers are simultaneously woven and have different patterns each other.

Specifically, the method of preparing the gas-inflatable double-layered fabric may include the step of weaving an inflating part having gas-inflatability, a non-inflating part supporting the inflating part, and a co-woven part constituting a boundary between the inflating part and the non-inflating part with an OPW method so that the inflating part is composed of a double patterned weave including separated top and bottom fabric layers which are simultaneously woven and have different patterns each other.

The weave patterns as illustrated in Figs. 8 to 10 may be applied to the gas-inflatable double-layered fabric according to the present invention so that the top fabric layer and the bottom fabric layer of the inflating part are simultaneously woven with different weave patterns. At this time, the top and bottom fabric layers of the double patterned weave may totally or partially differ at the corresponding position of the fabrics.

In the gas-inflatable double-layered fabric, the top and bottom fabric layers may be woven into a 1X1 weave, a 2X2 weave, a 3X3 weave, a stain weave, a warp rib weave, a weft rib weave, or a mixed weave thereof, respectively.

In the present invention the double patterned weave may be woven into various weave patterns as long as the top fabric layer and the bottom fabric layer have different weave patterns at the corresponding position each other. Specifically, in the double patterned weave, the weave of the top fabric layer may be woven into a 1X1 weave and the weave of the bottom fabric layer may be woven into a 2X2 weave, a 3X3 weave, a stain weave, a warp rib weave, a weft rib weave, or a mixed weave thereof; the weave of the top fabric layer may be woven into a 2X2 weave and the weave of the bottom fabric layer may be woven into a 1X1 weave, a 3X3 weave, a stain weave, a warp rib weave, a weft rib weave, or a mixed weave thereof; the weave of the top fabric layer may be woven into a 3X3 weave and the weave of the bottom fabric layer may be woven into a 1X1 weave, a 2X2 weave, a stain weave, a warp rib weave, a weft rib weave, or a mixed weave thereof; the weave of the top fabric layer may be woven into a stain weave and the weave of the bottom fabric layer may be woven into a 1X1 weave, a 2X2 weave, a 3X3 weave, a warp rib weave, a weft rib weave, or a mixed weave thereof; the weave of the top fabric layer may be woven into a warp rib weave and the weave of the bottom fabric layer may be woven into a 1X1 weave, a 2X2 weave, a 3X3 weave, a stain weave, a weft rib weave, or a mixed weave thereof; or the weave of the top fabric layer may be woven into a weft rib weave and the weave of the bottom fabric layer may be woven into a 1X1 weave, a 2X2 weave, a 3X3 weave, a stain weave, a warp rib weave, or a mixed weave thereof. At this time, it is also possible to change the top layer and the bottom layer of the double patterned weave so as to be a different weave. However, in the aspect of securing effective internal pressure maintaining property and excellent mechanical properties such as tearing strength in the airbag preparation, one of the top and bottom fabrics may be woven into a 1X1 weave, and the other fabric may be woven into a 2X2 weave or a 3X3 weave.

The gas-inflatable double-layered fabric of the present invention may be woven so that the area of the double patterned weave is 0.01% to 60%, preferably 0.05% to 50%, more preferably 0.1% to 40%, and still more preferably 0.3% to 35%, to the total area of the separated top and bottom fabric layers. The area of the double patterned weave may be 0.01% or more to the total area of the separated top and bottom fabric layers in the aspect of easily distinguishing the front and rear, the left and right, or the top and bottom of the final product including the double-layered fabric with the naked eye, and it may be 60% or less in the aspect of securing the optimized tension maintenance and weaving efficiency in the weaving process.

The crimp ratio in the process of weaving the inflating part may be 1% to 10%, preferably 2% to 9%, and more preferably 3% to 8%. If the crimp ratio is below 1%, the airbag cannot absorb the inflating energy sufficiently and it may burst because the elongation of the fabric is too low. And, if the crimp ratio excesses 10%, the gas inside the airbag cushion leaks out when the airbag is inflated, and the internal pressure maintaining rate may deteriorate remarkably because the elongation of the fabric is too high.

In the preparation method of the double-layered fabric, the weaving tension may be 30 to 550 cN, preferably 40 to 530 cN, and more preferably 50 to 500 cN. If the weaving tension is below 30 cN, there may be a problem of that the warp droops down by gravity and the weft insertion is not smooth. And, if the weaving tension excesses 500 cN, the yarn may be broken because the force applied to the warp is too big.

Furthermore, the weaving efficiency for the double-layered fabric of the present invention means a function value in which every loss caused by a production interruption in the process of operating the weaving machine is reflected, and represents an operation ratio (%) per 1 hr of the weaving machine. The weaving efficiency may be changed by various variables such as the kind, the elongation, and the fineness of yarn to be used and the weaving type such as a plain weave or a basket weave. By applying the double patterned weave as in the double-layered fabric of the present invention, the top fabric layer and the bottom fabric layer can be simultaneously woven with different patterns each other, and the excellent weaving efficiency can be maintained. Specifically, the weaving efficiency of the gas-inflatable double-layered fabric of the present invention may be 70% or more or 70% to 99%, preferably 75% or more or 75% to 99%, and more preferably 80% or more or 80% to 99%. The weaving efficiency of the double-layered fabric is preferably 70% or more because the mass productivity falls and the profitability may get worse when the weaving efficiency is too low.

Meanwhile, still another embodiment of the present invention provides a car airbag prepared by including the gas-inflatable double-layered fabric. The airbag is preferably a curtain airbag.

The airbag may be prepared by a method including the steps of coating a resin layer on one face of the gas-inflatable double-layered fabric and drying the same; and coating a resin layer on the other face of the gas-inflatable double-layered fabric and drying the same.

As described above, the gas-inflatable double-layered fabric of the present invention can minimize gas leakage during inflation, so that it is useful for car airbags, life jackets, and other shock-absorbing products. In addition, since the double-layered fabric of the present invention requires no sewing, the manufacture process can be simplified, and thus the manufacture cost can be reduced. Particularly, the front and rear, the left and right, or the top and bottom of the final product can be distinguished with the naked eye by applying different weave patterns to separated top layer and bottom layer of the gas-inflatable double-layered fabric, and thus the processing efficiency can be improved remarkably because there is no need to carry out a separate inspection for checking each product one by one or an additional process for signing or marking.

The matters except that disclosed above are not particularly limited because they may be added or subtracted according to the necessity in the present invention.

## EFFECTS OF THE INVENTION

According to the present invention, a gas-inflatable double-layered fabric composed of separated two fabric layers which are simultaneously woven by a OPW method and have different patterns each other at the corresponding position, and a car airbag prepared by including the same are provided.

Such gas-inflatable double-layered fabric prepared by the OPW method can maintain excellent mechanical properties and internal pressure maintaining performance, and can provide an airbag cushion effectively of which the front and rear and the left and right are easily distinguished without a separate additional process. Particularly, it is possible to minimize the process of manufacturing the final product and to reduce the manufacturing cost, because the double-layered fabric does not need a sewing process or an additional process of marking the final products one by one.

Therefore, the gas-inflatable double-layered fabric of the present invention can be used very preferably for preparing a car airbag.

## BRIEF DESCRIPTION OF THE DRAWINGS

Figs. 1a and 1b are cross sections of a weave organizing the double-layered fabric according to one embodiment of the present invention.

Figs. 2a and 2b are cross sections showing the inflated state of the gas-inflatable double-layered fabric according to one embodiment of the present invention.

Fig. 3 shows (a) a weave diagram of a 2X2 basket weave constituting the co-woven part, and (b) a cross section of the same, according to one embodiment of the present invention.

Fig. 4 shows (a) a weave diagram of a partially co-woven weave consisting of a plain double-layered weave and a 2X2 basket weave constituting the co-woven part, and (b) a cross section of the same, according to one embodiment of the present invention.

Fig. 5 shows (a) a weave diagram of a satin weave constituting the co-woven part, and (b) a cross section of the same, according to one embodiment of the present invention.

Fig. 6 shows complete weave diagrams of (a) to (c) warp rib weaves and (d) to (f) weft rib weaves of the co-woven part according to one embodiment of the present invention.

Fig. 8 shows (a) a weave diagram of separated two fabric layers of the double-layered fabric according to Example 1, (b) a cross section of the top fabric layer having a 2X2 basket weave, (c) a cross section of the bottom fabric layer having a 1X1 plain weave, and (d) a cross section of the fabric layers including the top layer and the bottom layer having different patterns each other.

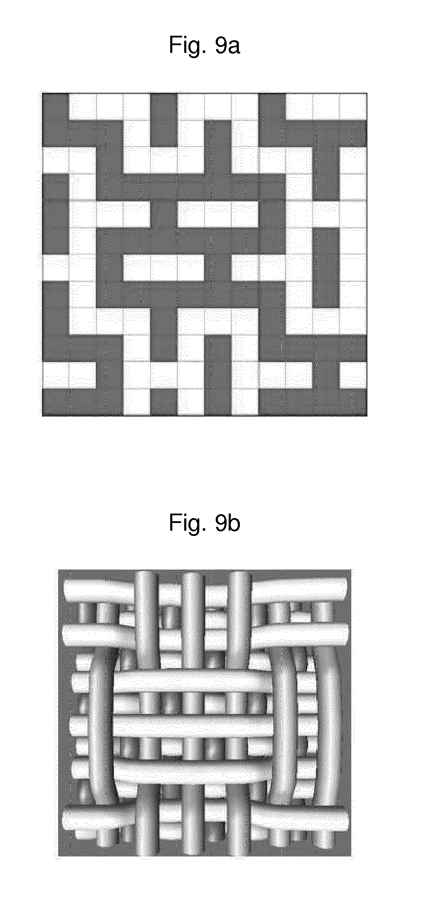

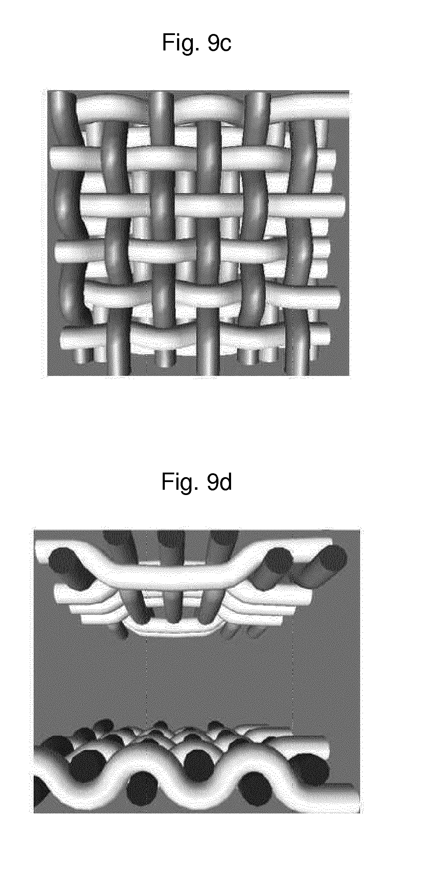

Fig. 9 shows (a) a weave diagram of separated two fabric layers of the double-layered fabric according to Example 2, (b) a cross section of the top fabric layer having a 3X3 basket weave, (c) a cross section of the bottom fabric layer having a 1X1 plain weave, and (d) a cross section of the fabric layers including the top layer and the bottom layer having different patterns each other.

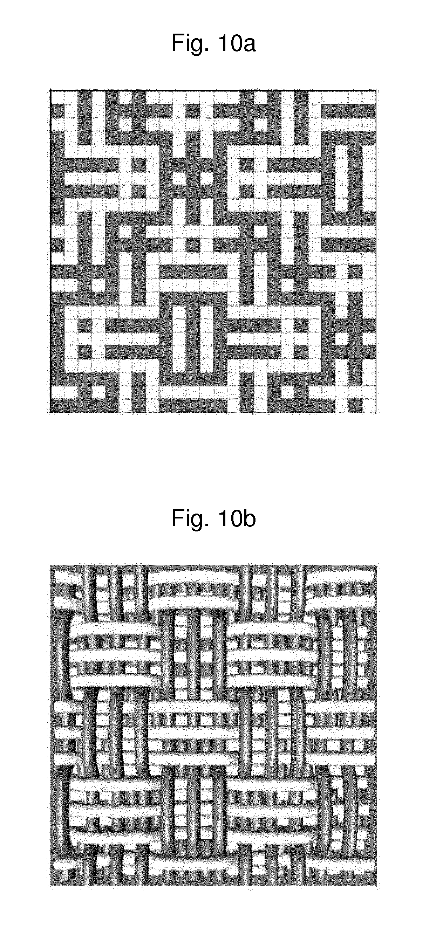

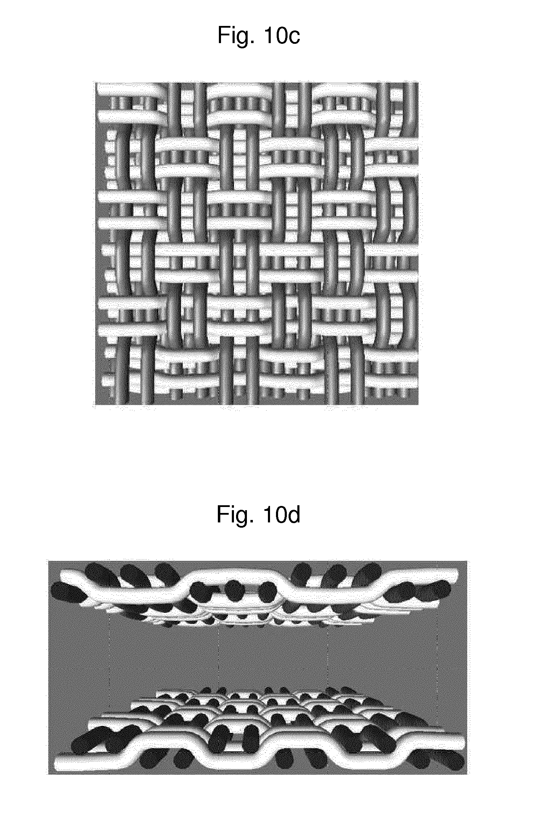

Fig. 10 shows (a) a weave diagram of separated two fabric layers of the double-layered fabric according to Example 3, (b) a cross section of the top fabric layer having a 3X3 basket weave, (c) a cross section of the bottom fabric layer having a 2X2 basket weave, and (d) a cross section of the fabric layers including the top layer and the bottom layer having different patterns each other.

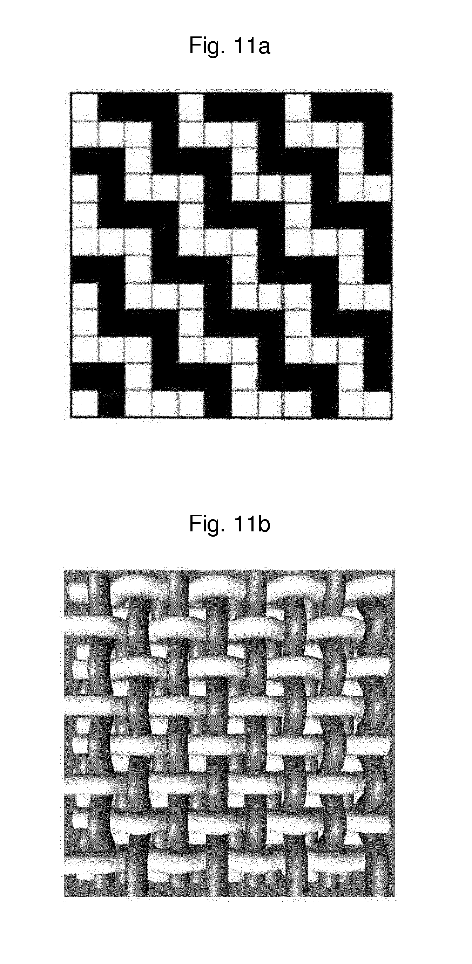

Fig. 11 shows (a) a weave diagram of separated two fabric layers of the double-layered fabric according to Comparative Example 1, (b) a cross section of the top layer and the bottom layer having the same 1X1 plain weave, and (d) a cross section of the fabric layers including the top layer and the bottom layer having the same pattern.

Fig. 12 is a schematic drawing showing a device for monitoring the internal pressure of an airbag according to one embodiment of the present invention.

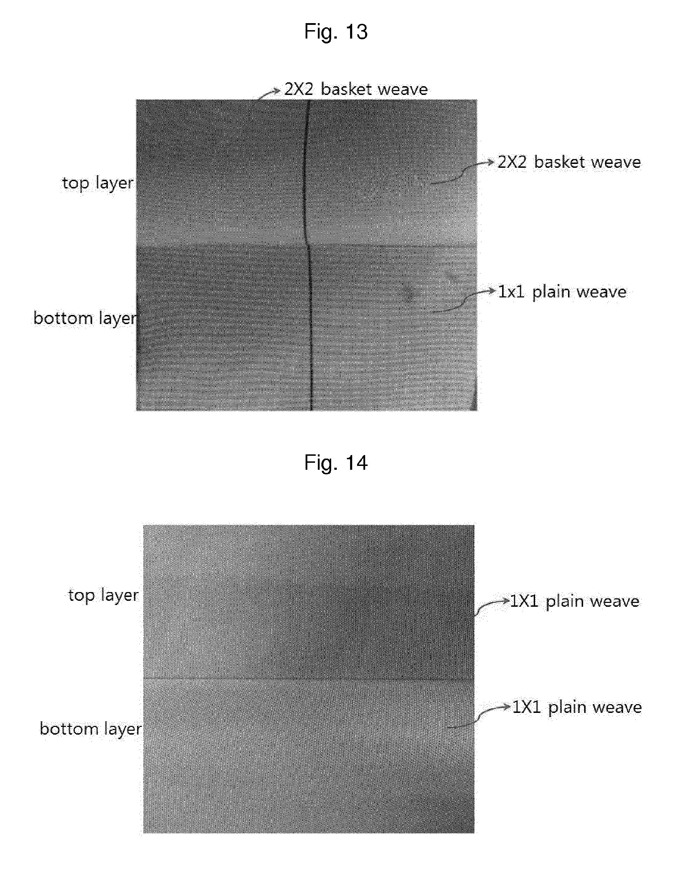

Fig. 13 is a photo of the double-layered fabric including the double patterned weave of which the top layer is a 2X2 basket weave and the bottom layer is a 1X1 plain weave, according to Example 1.

Fig. 14 is a photo of the double-layered fabric including the double patterned weave of which the top layer and the bottom layer are 1X1 plain weaves identically, according to Comparative Example 1.

<Explanations for signs of the principal parts of the drawings>

A: weave of the left separated layer part
B: weave of the right separated layer part
C: co-woven point

**[EXAMPLES]**

Hereinafter, the present invention is described in further detail through examples. However, the following examples are only for the understanding of the present invention and the scope of the present invention is not limited to or by them.

**Example 1**

The gas-inflatable double-layered fabric was prepared with polyamide multi-filaments having 420 denier as the warps and the wefts in a jacquard loom by an OPW method.

As illustrated in Figs 1a and 1b, the double-layered fabric was simultaneously woven so that the non-inflating part of the left separated part A and the inflating part of the right separated part B were divided by the co-woven part C. Here, the co-woven part C was woven into the 2X2 basket weave of 20 yarns as illustrated in Fig. 4, and the non-inflating part of the left separated part A centered on the co-woven part C was woven to have a partially co-woven weave in which a double-layered weave and a 2X2 basket weave were alternately co-woven step by step as illustrated in Fig. 7.

Furthermore, the inflating part of the right separated part B centered on the co-woven part C was woven into the weave pattern as illustrated in Fig. 8a of which the top layer was a 2X2 basket weave and the bottom layer was a 1X1 plain weave as illustrated in Figs. 8b and 8c respectively. Therefore, the inflating part was prepared into a weave form including the double-layered pattern weave of which the top layer and the bottom layer included different patterns of a 2X2 basket weave and a 1X1 plain weave, respectively, as illustrated in Fig. 8d. The crimp ratio was 8%, and the weaving tension was 50 cN in the weaving process of the inflating part. At this time, the double patterned weave composed of the top layer and the bottom layer having different patterns each other was applied to the area corresponding to about 5% of the total area of the inflating part, and the top layer and the bottom layers of the inflating part were prepared to have the warp density of 57 yarns/inch and the weft density of 49 yarns/inch.

Subsequently, both faces of the double-layered fabric prepared above were coated with a silicone resin of 95 g/m² in order to prevent gas from leaking out of the co-woven point, or the weaving point organizing separated two layers.

**Example 2**

The double-layered fabric was prepared substantially according to the same method as in Example 1, except that the inflating part was woven into the weave pattern as illustrated in Fig. 9a of which the top layer was a 3X3 basket weave and the bottom layer was a 1X1 plain weave as illustrated in Figs. 9b and 9c respectively.

The inflating part was prepared into a weave form including the double-layered pattern weave of which the top layer and the bottom layer included different patterns of a 3X3 basket weave and a 1X1 plain weave, respectively, as illustrated in the cross-section of Fig. 9d.

### Example 3

The double-layered fabric was prepared substantially according to the same method as in Example 1, except that the inflating part was woven into the weave pattern as illustrated in Fig. 10a of which the top layer was a 3X3 basket weave and the bottom layer was a 2X2 basket weave as illustrated in Figs. 10b and 10c respectively.

The inflating part was prepared into a weave form including the double-layered pattern weave of which the top layer and the bottom layer included different patterns of a 3X3 basket weave and a 2X2 basket weave, respectively, as illustrated in the cross-section of Fig. 10d.

### Comparative Example 1

The double-layered fabric was prepared substantially according to the same method as in Example 1, except that the inflating part was woven into the weave pattern as illustrated in Fig. 11a of which the top layer and the bottom layer were identically a 1X1 plain weave as illustrated in Fig. 11b.

The inflating part was prepared into a weave form including the double-layered pattern weave of which the top layer and the bottom layer included the same pattern of a 1X1 plain weave as illustrated in the cross-section of Fig. 11c.

At this time, the warp density was 114 yarns/inch and the weft density was 98 yarns/inch. Subsequently, both faces of the double-layered fabric prepared above were coated with a silicone resin of 95 g/m$^2$ in order to prevent gas from leaking out of the co-woven point, or the weaving point organizing separated two layers.

### Comparative Example 2

The double-layered fabric was prepared substantially according to the same method as in Comparative Example 1, except that a 2X2 weave was applied thereto instead of a 1X1 plain weave.

### Comparative Example 3

The double-layered fabric was prepared substantially according to the same method as in Comparative Example 1, except that a 3X3 weave was applied thereto instead of a 1X1 plain weave.

### Experimental Example 1

The properties of the gas-inflatable double-layered fabrics and the performance of the airbags according to Examples 1 to 3 and Comparative Examples 1 to 3 were measured as follows.

a) Cover factor:

Calculated by the following Equation 1:

[Calculation Formula 1]

$$\text{Cover Factor (CF)} = \text{warp density (yarns/inch)} \times \sqrt{(\text{warp denier})} + \text{weft density (yarns/inch)} \times \sqrt{(\text{weft denier})}.$$

b) Stiffness: measured by the ASTM D 4032 circular band method.

c) Average thickness of one fabric layer: measured by the ASTM D 1777 method.

d) Seam strength: measured by the ISO 13934-1 method.

e) Elongation at break: measured by the ISO 13934-1 method.

f) Seam strength: measured by the ISO 13934-1 method.

g) Tearing strength: measured by the DIN 53356 method.

h) Measurement for internal pressure of the double-layered fabric airbag:

As illustrated in Fig. 12, change of the internal pressure of the airbag was measured according to a time slot after inflating the airbag by injecting compressed nitrogen gas of 25 bar therein as air. An electronic control device was used here in order to control the operations of injecting and blocking air, because it is preferable to minimize an error by controlling the operations electronically.
At this time, the initial maximum pressure and the internal pressure after 6 seconds were measured when the gas was injected therein with an instant pressure of 25 bar

i) Evaluation on appearance identification of the double-layered fabric:

When a front face and a rear face of a cushion were apparently distinguished with the naked eye, it was evaluated as 'possible'; otherwise, it was evaluated as 'impossible'.

j) Weaving efficiency:

Weaving efficiency means a function value in which every loss caused by a production interruption in the process of operating a weaving machine is reflected. The average operating time per 1 hr of the weaving machine was measured and represented by an operation ratio (%) per 1 hr.
The results of the properties measured for the gas-inflatable double-layered fabrics according to Examples 1 to 3 and Comparative Examples 1 to 3 were listed in the following Table 1.

[Table 1]

| | | Example 1 | Example 2 | Example 3 | Comparative Example 1 | Comparative Example 2 | Comparative Example 3 |
|---|---|---|---|---|---|---|---|
| Cover factor | | 2,172 | 2,172 | 2,172 | 2,172 | 2,172 | 2,172 |
| Stiffness (kgf) | | 1.3 | 1.4 | 1.3 | 1.4 | 2.1 | 2.5 |
| Thickness (mm) | | 0.37 | 0.38 | 0.37 | 0.37 | 0.53 | 0.72 |
| Seam strength (N/5cm) | | 1,470 | 1,516 | 1,537 | 1,507 | 1,700 | 1,900 |
| Elongation at break (%) | Warp direction | 35 | 35 | 35 | 35 | 40 | 48 |
| | Weft direction | 25 | 25 | 26 | 25 | 30 | 32 |
| Tensile strength (N/5cm) | Warp direction | 3,468 | 3,413 | 3,404 | 3,412 | 4,209 | 5,610 |
| | Weft direction | 3,190 | 3,221 | 3,175 | 3,180 | 4,182 | 5,401 |
| Tearing strength (N) | Warp direction | 267 | 251 | 260 | 260 | 450 | 614 |
| | Weft direction | 321 | 316 | 333 | 321 | 480 | 608 |

(continued)

| | | Example 1 | Example 2 | Example 3 | Comparative Example 1 | Comparative Example 2 | Comparative Example 3 |
|---|---|---|---|---|---|---|---|
| Internal pressure of airbag (kpa) | initial maximum internal pressure | 110 | 114 | 113 | 112 | 113 | 108 |
| | Internal pressure after 6 secs. | 65 | 62 | 63 | 61 | 54 | 58 |
| Evaluation on appearance identification | | Possible | Possible | Possible | Impossible | Impossible | Impossible |
| Weaving efficiency (%) | | 90 | 90 | 90 | 90 | 50 | 40 |

Meanwhile, as illustrated in Fig. 13, it is recognizable that the gas-inflatable double-layered fabric of Example 1 of which the separated two fabric layers of the inflating part are composed of different patterns each other according to the present invention has the front face and the rear face apparently distinguishable with the naked eye.

But, as illustrated in Fig. 14, it is impossible to distinguish the front face and the rear face of the cushion made of the double-layered fabric of Comparative Example 1 of which the top layer and the bottom layer are composed of the same weave according to a prior integral weaving method. Such evaluation result of appearance identification 'impossible' is relevant to all of the double-layered fabrics of which the top layer and the bottom layer are composed of the same weave according to the prior method, including not only the double-layered fabric of Comparative Example 1 but also the double-layered fabrics of Comparative Examples 2 and 3, and thus they need a separate inspection, and an additional process for signing or marking.

Furthermore, as shown in Table 1, the stiffness of the gas-inflatable double-layered fabrics of Examples 1 to 3 of the present invention was 1.3 to 1.4 kgf, the thickness of one fabric layer was 0.37 to 0.38 mm, and the seam strength was 1,470 to 1,537 N/5cm, and thus it is recognizable that the fabrics have excellent foldability in addition to excellent mechanical properties. Furthermore, the initial maximum internal pressure of the gas-inflatable double-layered fabrics of Examples 1 to 3 was 110 to 114 KPa when the gas is injected therein with an instant pressure of 25 bar, and the internal pressure after 6 seconds was 62 to 65 KPa. Therefore, it is also recognizable that the fabrics can be effectively used to a car airbag or a life jacket with very excellent internal pressure maintaining performance.

Meanwhile, the gas-inflatable double-layered fabrics of Comparative Examples 1 to 3 show similar tensile strength, tearing strength, and seam strength to Examples 1 to 3, but it is impossible to distinguish the front face and the rear face with the naked eye in the appearance inspection of the airbag cushion and the direction of the final product cannot be confirmed. Moreover, since both of the top layer and the bottom layer of Comparative Examples 2 and 3 are composed of the same 2x2 and 3x3 basket weaves respectively, the thickness and the stiffness of the fabric layer were increased and it is not easy to set up the airbag inside a vehicle because of inferior folding property. Furthermore, there may be a problem with securing the passenger's safety because the airbag may not be inflated normally by air pressure when the airbag is inflated.

Furthermore, it is also recognizable that the gas-inflatable double-layered fabrics of Examples 1 to 3 maintain very excellent weaving efficiency of 90%, but the weaving efficiencies of the gas-inflatable double-layered fabrics of Comparative Examples 2 and 3 are just 40% and 50% respectively and they have a problem of apparently poor productivity.

## Claims

1.    A gas-inflatable double-layered fabric, including a double patterned weave comprised of separated top and bottom fabric layers which are simultaneously woven and have different patterns each other.

2.    The gas-inflatable double-layered fabric according to Claim 1, wherein the top and bottom fabric layers include a 1X1 weave, a 2X2 weave, a 3X3 weave, a stain weave, a warp rib weave, a weft rib weave, or a mixed weave thereof, respectively.

3. The gas-inflatable double-layered fabric according to Claim 1, wherein the weaves of the top fabric layer and the bottom fabric layer of the double patterned weave are composed as follows:

the weave of the top fabric layer is a 1X1 weave and the weave of the bottom fabric layer is a 2X2 weave, a 3X3 weave, a stain weave, a warp rib weave, a weft rib weave, or a mixed weave thereof;
the weave of the top fabric layer is a 2X2 weave and the weave of the bottom fabric layer is a 1X1 weave, a 3X3 weave, a stain weave, a warp rib weave, a weft rib weave, or a mixed weave thereof;
the weave of the top fabric layer is a 3X3 weave and the weave of the bottom fabric layer is a 1X1 weave, a 2X2 weave, a stain weave, a warp rib weave, a weft rib weave, or a mixed weave thereof;
the weave of the top fabric layer is a stain weave and the weave of the bottom fabric layer is a 1X1 weave, a 2X2 weave, a 3X3 weave, a warp rib weave, a weft rib weave, or a  mixed weave thereof;
the weave of the top fabric layer is a warp rib weave and the weave of the bottom fabric layer is a 1X1 weave, a 2X2 weave, a 3X3 weave, a stain weave, a weft rib weave, or a mixed weave thereof; or
the weave of the top fabric layer is a weft rib weave and the weave of the bottom fabric layer is a 1X1 weave, a 2X2 weave, a 3X3 weave, a stain weave, a warp rib weave, or a mixed weave thereof.

4. The gas-inflatable double-layered fabric according to Claim 1, wherein the cover factor of the top and bottom fabric layers is 1900 or more, according to the following Calculation Formula 1:

[Calculation Formula 1]

$$\text{Cover Factor (CF)} = \text{warp density (yarns/inch)} \times \sqrt{(\text{warp denier})} + \text{weft density (yarns/inch)} \times \sqrt{(\text{weft denier})} .$$

5. The gas-inflatable double-layered fabric according to Claim 1, wherein the stiffness of the top and bottom fabric layers is 3.5 kgf or less.

6. The gas-inflatable double-layered fabric according to Claim 1, wherein the thickness of the top and bottom fabric layers is 0.5 mm or less.

7. A method of preparing a gas-inflatable double-layered fabric, including the step of weaving a double patterned weave with an OPW (one piece woven) method so that separated top and  bottom fabric layers are simultaneously woven and have different patterns each other.

8. The method according to Claim 7, wherein the top and bottom fabric layers have a 1X1 weave, a 2X2 weave, a 3X3 weave, a stain weave, a warp rib weave, a weft rib weave, or a mixed weave thereof, respectively.

9. The method according to Claim 7, wherein the weaves of the top fabric layer and the bottom fabric layer of the double patterned weave are composed as follows:

the weave of the top fabric layer is a 1X1 weave and the weave of the bottom fabric layer is a 2X2 weave, a 3X3 weave, a stain weave, a warp rib weave, a weft rib weave, or a mixed weave thereof;
the weave of the top fabric layer is a 2X2 weave and the weave of the bottom fabric layer is a 1X1 weave, a 3X3 weave, a stain weave, a warp rib weave, a weft rib weave, or a mixed weave thereof;
the weave of the top fabric layer is a 3X3 weave and the weave of the bottom fabric layer is a 1X1 weave, a 2X2 weave, a stain weave, a warp rib weave, a weft rib weave, or a mixed weave thereof;
the weave of the top fabric layer is a stain weave and the weave of the bottom fabric layer is a 1X1 weave, a 2X2 weave, a 3X3 weave, a warp rib weave, a weft rib weave, or a mixed weave thereof;
the weave of the top fabric layer is a warp rib weave and the weave of the bottom fabric layer is a 1X1 weave, a 2X2 weave, a 3X3 weave, a stain weave, a weft rib weave, or a mixed weave thereof; or
the weave of the top fabric layer is a weft rib weave and the weave of the bottom fabric layer is a 1X1 weave, a 2X2 weave, a 3X3 weave, a stain weave, a warp rib weave, or a mixed weave thereof.

10. The method according to Claim 7, wherein the crimp ratio in the weaving step is 1% to 10%.

**11.** A car airbag, including the gas-inflatable double-layered fabric according to any one of Claims 1 to 7.

**12.** The airbag according to Claim 11, wherein the airbag is a curtain airbag.

Fig. 1a

Fig. 1b

Fig. 2a

Fig. 2b

Fig. 3

(a)

(b)

Fig. 4

(a)

(b)

Fig. 5

(a)

(b)

Fig. 6

(a)   (b)   (c)   (d)   (f)   (g)

Fig. 7

(a)                    (b)

## Fig. 8a

## Fig. 8b

Fig. 8c

Fig. 8d

Fig. 9a

Fig. 9b

Fig. 9c

Fig. 9d

Fig. 10a

Fig. 10b

Fig. 10c

Fig. 10d

## Fig. 11a

## Fig. 11b

## Fig. 11c

## Fig. 12

second tank

solenoid valve     solenoid valve

first high compression tank

airbag

pressure sensor

computer

## Fig. 13

2X2 basket weave

top layer

bottom layer

2X2 basket weave

1x1 plain weave

## Fig. 14

top layer

bottom layer

1X1 plain weave

1X1 plain weave